# EUROPÄISCHE PATENTSCHRIFT

(11) **EP 4 214 429 B1**
(45) Veröffentlichungstag und Bekanntmachung des Hinweises auf die Patenterteilung: **30.10.2024**
(21) Anmeldenummer: 21769376.1
(22) Anmeldetag: 24.08.2021
(51) Int. Cl.: F16J 15/34, G05B 23/02

(54) **VERFAHREN ZUM BETREIBEN EINER GLEITRINGDICHTUNGSANORDNUNG SOWIE GLEITRINGDICHTUNGSANORDNUNG**
METHOD FOR OPERATING A MECHANICAL FACE SEAL ASSEMBLY, AND MECHANICAL FACE SEAL ASSEMBLY
PROCÉDÉ DE FONCTIONNEMENT D'UN ENSEMBLE GARNITURE DE FACE MÉCANIQUE, ET ENSEMBLE GARNITURE DE FACE MÉCANIQUE

(30) Priorität: 17.09.2020 DE 102020124238
(43) Veröffentlichungstag der Anmeldung: 26.07.2023
(73) Patentinhaber: EagleBurgmann Germany GmbH & Co. KG, 82515 Wolfratshausen (DE)
(72) Erfinder: OTSCHIK, Joachim, 82418 Murnau (DE); MÜLLER, Michael, 83673 Bichl (DE); LANG, Klaus, 82547 Eurasburg (DE); JOHANNES, Rolf, 82393 Iffeldorf (DE); LAXANDER, Armin, 82067 Ebenhausen (DE)
(74) Vertreter: Hoefer & Partner Patentanwälte mbB
(86) Internationale Anmeldenummer: PCT/EP2021/073372
(87) Internationale Veröffentlichungsnummer: WO 2022/058129

(56) Entgegenhaltungen:
- EP-A1- 3 617 824
- WO-A1-2020/006779
- US-A1- 2020 278 325
- US-B2- 10 417 614

## Beschreibung

Die vorliegende Erfindung betrifft ein Verfahren zum Betreiben einer Gleitringdichtungsanordnung unter Verwendung eines digitalen Zwillings der Gleitringdichtung digital abbildet sowie eine Gleitringdichtungsanordnung mit einem digitalen Zwilling.

Gleitringdichtungsanordnungen sind aus dem Stand der Technik in unterschiedlichen Ausgestaltungen bekannt. Gleitringdichtungsanordnung übernehmen hierbei wichtige Abdichtungsfunktionen an unterschiedlichen Maschinen, wobei hierbei insbesondere auch kritische Medien abzudichten sind. Von daher ist über eine Lebensdauer der Gleitringdichtungsanordnung eine sichere Abdichtung notwendig. Um möglichst früh einen möglichen Ausfall der Gleitringdichtungsanordnung vorhersagen zu können, ist es bekannt, hierbei Temperatursensoren möglichst nahe an den Gleitringen der Gleitringdichtungsanordnung anzubringen und die Temperatur der Bauteile der Gleitringdichtung zu überwachen. Bei Erreichen von kritischen Temperaturen kann dies ein Hinweis darauf sein, dass die Gleitringdichtungsanordnung möglicherweise ein technisches Problem bekommen könnte, so dass eine Abdichtung eines kritischen Mediums nicht mehr hundertprozentig gesichert ist.

Die US 2020/0278325 A1 offenbart ein Vorhersagediagnosesystem zur Überwachung von Gleitringdichtungen. Das System erfasst autonom einen Verlust von Schmierung innerhalb des Dichtungssystems, wobei mehrere Sensoren Daten der Gleitringdichtung erfassen.

Es ist daher Aufgabe der vorliegenden Erfindung, ein Verfahren zum Betreiben einer Gleitringdichtungsanordnung sowie eine Gleitringdichtungsanordnung bereitzustellen, welche bei einfachem Aufbau und einfacher, kostengünstiger Herstellbarkeit, eine verbesserte Überwachung der Gleitringdichtungsanordnung ermöglicht.

Diese Aufgabe wird durch ein Verfahren mit den Merkmalen des Anspruchs 1 und eine Gleitringdichtungsanordnung mit den Merkmalen des Anspruchs 7 gelöst. Die Unteransprüche zeigen jeweils bevorzugte Weiterbildungen der Erfindung.

Das erfindungsgemäße Verfahren zum Betreiben einer Gleitringdichtungsanordnung mit den Merkmalen des Anspruchs 1 weist den Vorteil auf, dass durch Verwendung eines digitalen Zwillings einer Gleitringdichtung ein regelbasiertes Betreiben der Gleitringdichtungsanordnung möglich ist. Hierbei bildet der digitale Zwilling ein digitales Abbild der zu betreibenden, realen Gleitringdichtung. Der digitale Zwilling basiert dabei auf mathematischen Berechnungsmodellen sowie insbesondere vorgegebenen geometrischen und physikalischen Größen der Gleitringdichtung und/oder erfassten Betriebsdaten und/oder Umgebungsdaten der Gleitringdichtung.

Dabei umfasst das Verfahren die Schritte des Erfassens von einer Vielzahl von Betriebsdaten und/oder Umgebungsdaten der Gleitringdichtung sowie das Übertragen der erfassten Betriebsdaten und/oder Umgebungsdaten an den digitalen Zwilling. Der digitale Zwilling ist beispielsweise auf einem Zentralrechner abgebildet. Ferner wird mittels des digitalen Zwillings ein Betrieb der Gleitringdichtung simuliert und überwacht, wobei die zum digitalen Zwilling übertragenen Betriebsdaten und/oder Umgebungsdaten der Gleitringdichtung hinzugezogen werden. Anschließend wird ein Simulationsergebnis und/oder Daten vom Zentralrechner des digitalen Zwillings zurück an die Gleitringdichtung übermittelt. Bei der Simulation und Überwachung des Betriebs der Gleitringdichtung kann insbesondere ein Vergleich der erfassten Betriebsdaten und/oder Umgebungsdaten der Gleitringdichtung mit vorbestimmten Soll-Daten durch den digitalen Zwilling erfolgen. Sollten hierbei Abweichungen auftreten, ist dies ein Hinweis auf ein mögliches Problem der realen Gleitringdichtung, so dass durch Rücksenden der Simulationsergebnisse und/oder Daten gegebenenfalls Gegenmaßnahmen an der realen Gleitringdichtung vorgenommen werden können.

Ferner werden bei der Rückübermittlung des Simulationsergebnisses an die reale Gleitringdichtung auch Betriebsbefehle für die Gleitringdichtung mit übermittelt. Dadurch ist eine Fernsteuerung der Gleitringdichtung mit Hilfe des digitalen Zwillings möglich.

Insbesondere können die gewonnenen Simulationsergebnisse mit weiteren zusätzlichen neu erfassten Daten aus der realen Gleitringdichtung kombiniert werden und eine neue Simulation gestartet werden. Dadurch kann kontinuierlich, in Realzeit oder in vorbestimmten Intervallen, eine Überwachung der realen Gleitringdichtung basierend auf einem aktuellen Simulationsergebnis in Kombination mit neuen Betriebsdaten und/oder Umgebungsdaten ausgeführt werden. Hierdurch besteht die Möglichkeit, dass schnell auf sich ändernde Betriebsdaten und/oder Umgebungsdaten der Gleitringdichtung reagiert werden kann und entsprechende Gegenmaßnahmen ausgeführt werden können.

Weiter bevorzugt werden die erfassten Betriebsdaten und/oder Umgebungsdaten der Gleitringdichtung von einem Anlagenrechner an der Gleitringdichtung ausgewertet. Durch die direkte Auswertung der erfassten Betriebsdaten an der Gleitringdichtung kann eine Datenreduktion ermöglicht werden, so dass die zur Übertragung notwendige Energie und die übertragenen Datenmengen von der Gleitringdichtung zum digitalen Zwilling reduziert werden können. Dies ist insbesondere bei einer bevorzugten drahtlosen Datenübertragung zwischen der Gleitringdichtungsanordnung und dem digitalen Zwilling von Vorteil. Dadurch kann mittels des erfindungsgemäßen Verfahrens ein sinnvolles Edge-Computing ausgeführt werden.

Besonders bevorzugt werden die erfassten Betriebsdaten und/oder Umgebungsdaten der Gleitringdichtung vor einem Übertragen an den digitalen Zwilling gefiltert. Dadurch hat ein Nutzer der Gleitringdichtung die Möglichkeit, bestimmte Daten nicht an den digitalen Zwilling, welcher vorzugsweise bei einem Hersteller der Gleitringdichtung betrieben wird, zu übertragen. Dadurch können geheimhaltungsbedürftige Informationen beim Nutzer der Gleitringdichtung verbleiben und nur die zur Steuerung der Gleitringdichtung notwendigen Daten werden an den digitalen Zwilling, welcher außerhalb des Nutzungsbereichs des Nutzers ist, übermittelt.

Weiter bevorzugt werden die Simulationsergebnisse und/oder Daten des digitalen Zwillings vor einem Übertragen vom digitalen Zwilling an die reale Gleitringdichtung ebenfalls gefiltert. Dadurch kann durch den Betreiber des digitalen Zwillings gefiltert werden, welche Informationen an die reale Gleitringdichtungsanordnung zurückübertragen werden. Ferner kann durch die Filterung auch eine Datenreduktion erfolgen. Insbesondere werden nur für den Betrieb der Gleitringdichtung relevante Simulationsergebnisse und Befehle vom digitalen Zwilling an die reale Gleitringdichtung übermittelt.

Gemäß einer weiteren bevorzugten Ausgestaltung der Erfindung wird bei der Verarbeitung der erfassten Betriebsdaten im digitalen Zwilling eine Trendanalyse der erfassten Betriebsdaten durchgeführt. Hierdurch können weitere Verläufe von Betriebsdaten extrapoliert werden und insbesondere bei der Steuerung der realen Gleitringdichtung verwendet werden.

Weiter bevorzugt werden bei der Verarbeitung der erfassten Betriebsdaten im digitalen Zwilling Cluster gebildet, um im Rahmen einer Clusteranalyse mehrere einzelne Datensätze zusammenzufassen. Dadurch kann eine sinnvolle Datenreduktion ermöglicht werden.

Gemäß einer weiteren bevorzugten Ausgestaltung der Erfindung erfolgt vor dem Schritt des Übertragens von Daten eine Reduzierung der Daten. Dabei können sowohl die Daten, welche zum digitalen Zwilling übertragen werden, als auch die Daten, welche vom digitalen Zwilling zurückübertragen werden, reduziert werden. Dadurch kann insbesondere eine einfache und schnellere Verarbeitung der Daten ermöglicht werden und auch eine Kommunikation beschleunigt werden.

Vorzugsweise sind die erfassten Betriebsdaten der realen Gleitringdichtung ausgewählt aus Daten zur Temperatur, Druck, Drehzahl, Leckage über die Gleitringdichtung, Spalthöhe der Gleitringdichtung, Vibrationen an den Gleitringen der Gleitringdichtung, Körperschall, Oberflächenschall, Spannungen und/oder Verformungen der Gleitringe, Auftreten eines Kontaktes der Gleitflächen der Gleitringe und/oder Verschleiß an den Gleitringen der Gleitringdichtung.

Weiter bevorzugt umfasst der Anlagenrechner an der Gleitringdichtung einen konfigurierbaren zweiten digitalen Zwilling. Der konfigurierbare zweite digitale Zwilling ist vorzugsweise im Vergleich mit dem ersten digitalen Zwilling mit reduzierten Funktionen ausgestattet. Dadurch ist es möglich, dass beim Nutzer der Gleitringdichtungsanordnung ein angepasster zweiter digitaler Zwilling vorhanden ist, mit welchem beispielsweise eingeschränkte Simulationen und/oder Überwachungen der Gleitringdichtungsanordnung durchgeführt werden können. Hierbei ist der konfigurierbare, zweite digitale Zwilling eingerichtet, vom ersten digitalen Zwilling Daten und/oder Updates zu empfangen.

Besonders bevorzugt sind der erste digitale Zwilling und/oder der zweite digitale Zwilling als lernendes System ausgelegt, so dass durch die Erfahrungen im Betrieb der Gleitringdichtungsanordnung eine ständige Anpassung und Aktualisierung des ersten digitalen Zwillings erfolgt.

Ferner betrifft die vorliegende Erfindung eine Gleitringdichtungsanordnung umfassend eine Gleitringdichtung mit einem rotierenden und einem stationären Gleitring, welche zwischen ihren Gleitflächen einen Dichtspalt definieren. Die Gleitringdichtung umfasst dabei eine Vielzahl von Sensoren, um verschiedene Betriebsdaten und/oder Umgebungsdaten der Gleitringdichtung zu erfassen. Ferner umfasst die Gleitringdichtungsanordnung einen Zentralrechner mit einem digitalen Zwilling der realen Gleitringdichtung, wobei der Zentralrechner eingerichtet ist, einen Betrieb der realen Gleitringdichtung auf dem digitalen Zwilling basierend auf den erfassten Betriebsdaten und/oder Umgebungsdaten und bereits vorhandenen Daten der Gleitringdichtung zu simulieren. Die bereits vorhandenen Daten der Gleitringdichtung können beispielsweise physikalische Daten sein oder geometrische Abmessungen der Gleitringdichtung und weitere Daten, beispielsweise des abzudichtenden Mediums, insbesondere einer Durchschnittstemperatur des abzudichtenden Mediums und/oder einem abzudichtenden Durchschnittsdruck oder weiterer Umgebungsdaten der Gleitringdichtung sein, sowie auch aus einem vorhergehenden Simulationsvorgang gewonnene Daten. Ferner umfasst die Gleitringdichtungsanordnung eine Sender-Empfängereinrichtung, welche eingerichtet ist, um die erfassten Betriebsdaten und/oder Umgebungsdaten zum Zentralrechner mit dem digitalen Zwilling zu übertragen und um die erzeugten Simulationsergebnisse und/oder Daten des digitalen Zwillings und Betriebsbefehle für die Gleitringdichtung zu empfangen. Es sei angemerkt, dass hierbei eine separate Sender-Empfängereinrichtung vorgesehen sein kann oder alternativ auch eine an der abzudichtenden Maschine vorhandene Sender-Empfängereinrichtung mitgenutzt werden kann.

Weiter bevorzugt umfasst die Gleitringdichtung ferner einen Anlagenrechner an der Gleitringdichtung, welcher beim Nutzer der Gleitringdichtung betrieben wird und eingerichtet ist, die erfassten Betriebsdaten und/oder Umgebungsdaten zu verarbeiten. Dadurch kann eine Verarbeitung der erfassten Betriebsdaten direkt an oder nahe der Gleitringdichtung erfolgen und somit bevorzugt eine Datenreduktion direkt am Anlagenrechner erfolgen. Dadurch kann der Aufwand zur Übertragung der Betriebsdaten und/oder Umgebungsdaten signifikant reduziert werden.

Der Anlagenrechner ist weiter bevorzugt eingerichtet, die erfassten Betriebsdaten und/oder Umgebungsdaten zu filtern. Dadurch kann ein Nutzer der Gleitringdichtung beispielsweise einfach bestimmen, welche Daten an den digitalen Zwilling zur Datenanalyse herausgegeben werden sollen und welche Daten geheim bleiben sollen.

Besonders bevorzugt ist der Zentralrechner mit dem digitalen Zwilling eingerichtet, mit den erfassten Betriebsdaten und/oder Umgebungsdaten der realen Gleitringdichtung eine Trendanalyse durchzuführen, um insbesondere durch Exploration eine zukünftige Vorhersage von Betriebsparametern zu ermöglichen. Weiter bevorzugt ist der Zentralrechner eingerichtet, eine Clusterung von Betriebsdaten und/oder Umgebungsdaten und/oder Simulationsdaten auszuführen, um die Simulation zu beschleunigen und/oder die zu rückübertragenden Simulationsergebnisse hinsichtlich ihres Datenumfangs zu reduzieren. Bevorzugt wird vor jeder Datenübertragung eine Reduzierung der Daten durchgeführt.

Weiter bevorzugt umfasst die Gleitringdichtungsanordnung einen Cloud-Rechner, welcher zwischen dem Zentralrechner und dem Anlagenrechner zwischengeschaltet ist. Hierbei sei angemerkt, dass der digitale Zwilling und Rechenvorgänge auch im Cloud-Rechner ausgeführt werden können, so dass beispielsweise dem digitalen Zwilling nur schon überarbeitete, erfasste Betriebsdaten zugeführt werden und die Simulation mit diesen überarbeiteten Betriebsdaten ausgeführt wird.

Weiter bevorzugt umfasst der Anlagenrechner einen konfigurierbaren, zweiten digitalen Zwilling. Der konfigurierbare, zweite digitale Zwilling weist einen gleichen oder einen geringeren Funktionsumfang als der erste digitale Zwilling am Zentralrechner auf. Dadurch kann der konfigurierbare zweite digitale Zwilling beispielsweise schneller notwendige Simulationsergebnisse, z.B. bei Auftreten eines Notfalls, geben. Weiterhin kann ein Nutzer der Gleitringdichtungsanordnung den zweiten digitalen Zwilling auch selbst konfigurieren und beispielsweise für ihn wichtige Parameter simulieren und/oder überwachen. Weiter bevorzugt verwendet der erste digitale Zwilling im Zentralrechner schon Überwachungs- und/oder Simulationsergebnisse des konfigurierbaren zweiten digitalen Zwillings, so dass eine Datenverarbeitung im ersten digitalen Zwilling beschleunigt werden kann.

Weiter bevorzugt ist der erste digitale Zwilling und/oder der konfigurierbare, zweite digitale Zwilling, jeweils als lernendes System eingerichtet. Dadurch kann eine Anpassung der digitalen Zwillinge über die Zeit erfolgen.

Nachfolgend wird unter Bezugnahme auf die begleitende Zeichnung ein Ausführungsbeispiel der Erfindung im Detail beschrieben. In der Zeichnung ist:

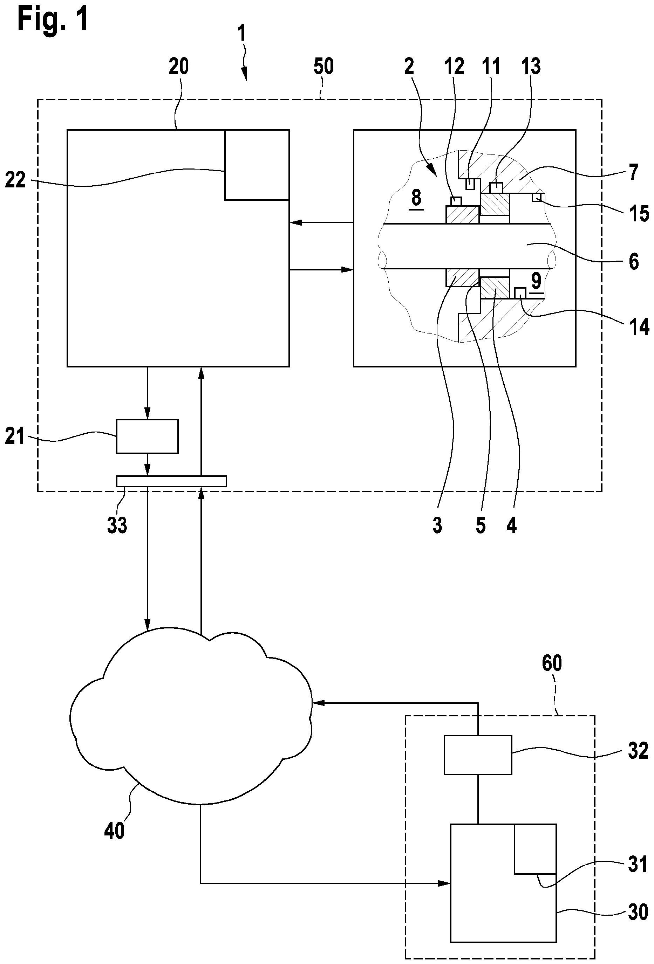

- Fig. 1: eine schematische Darstellung einer Gleitringdichtungsanordnung gemäß einem bevorzugten Ausführungsbeispiel der Erfindung.

Wie aus Fig. 1 ersichtlich ist, umfasst die Gleitringdichtungsanordnung 1 eine Gleitringdichtung 2, welche bei einem Nutzer 50 der Gleitringdichtung angeordnet ist sowie einen Zentralrechner 30, welcher beispielsweise bei einem Hersteller der Gleitringdichtung angeordnet ist.

Die Gleitringdichtung 2 umfasst einen rotierenden Gleitring 3 und einen stationären Gleitring 4, welche zwischen ihren Gleitflächen einen Dichtspalt 5 definieren. Die Gleitringdichtung 2 dichtet an einer Welle 6 und einem Gehäuse 7 zwischen einem Produktbereich 8 und einen Atmosphärenbereich 9 ab.

Die Gleitringdichtung 2 umfasst ferner eine Vielzahl von Sensoren. In diesem Ausführungsbeispiel ist ein erster Sensor 11 als Drehzahlsensor zur Bestimmung einer Drehzahl der Gleitringdichtung vorgesehen. Ein zweiter Sensor 12 ist ein kombinierter Temperatur-Druck-Sensor, welcher nahe der Gleitringdichtung Druck und/oder Temperatur erfasst. Ein dritter Sensor 13 ist ein Vibrationssensor. Ein vierter Sensor 14 ist ein kombinierter Körperschall-Oberflächenschallsensor. Ein fünfter Sensor 15 ist ein Leckagesensor.

Die Gleitringdichtung 2 umfasst ferner einen Anlagenrechner 20, welcher nahe der Gleitringdichtung im Bereich des Nutzers angeordnet ist.

Der Zentralrechner 30 umfasst einen digitalen Zwilling 31, welcher ein vollständiges digitales Abbild der realen Gleitringdichtung 2 darstellt. Der digitale Zwilling 31 basiert auf Grunddaten der Gleitringdichtung 2, beispielsweise geometrischen und physikalischen Daten, z.B. Abmessungen der Gleitringdichtung, verwendete Materialien, Umgebungsdaten, sowie grundsätzlichen Betriebsdaten, beispielsweise Temperatur, Druck und Drehzahl, mit welcher die Gleitringdichtung 2 betrieben werden soll.

Die Sensoren 11 bis 15 erfassen dabei jeweils die Daten an der realen Gleitringdichtung 2 und übertragen diese, vorzugsweise drahtlos, zum Anlagenrechner 20. Der Anlagenrechner 20 ist eingerichtet, die Datenmengen zu reduzieren, um eine möglichst einfache und effiziente Datenübertragung mittels einer eine Sender-Empfängereinrichtung 33 vom Anlagenrechner 20 zum Zentralrechner 30 zu ermöglichen. Wie aus Fig. 1 ersichtlich ist, ist vor der eigentlichen Datenübertragung beim Nutzer 50 noch ein erster Filter 21 vorgesehen, mit welchem der Nutzer 50 bestimmen kann, welche Art von Daten an den Zentralrechner 30 übertragen werden.

Wie weiter aus Fig. 1 ersichtlich ist, werden die Daten in diesem Ausführungsbeispiel nicht direkt zum Zentralrechner 30 übertragen, sondern über einen Cloud-Rechner 40 zum Zentralrechner 30 übertragen. Die erfassten und übertragenen Betriebsdaten werden im digitalen Zwilling 31 im Zentralrechner 30 verwendet, um eine Simulation und Überwachung der realen Gleitringdichtung 2 durchzuführen. Dabei wird kontinuierlich, vorzugsweise in Realzeit, eine Simulation der realen Gleitringdichtung 2 ausgeführt und jeweils Simulationsergebnisse ausgegeben. Die Simulationsergebnisse werden dann wieder zurück zum Anlagenrechner 20 der Gleitringdichtung 2 übertragen. Hierbei kann der Hersteller 60 die Simulationsergebnisse und/oder weitere übertragene Daten und/oder Befehle mittels eines zweiten Filters 32 filtern. Die Übertragung vom Zentralrechner 30 des Herstellers 60 auf den Anlagenrechner 20 erfolgt wieder, wie in Fig. 1 gezeigt, über den Cloud-Rechner 40.

Bei der Simulation werden vorangehende Simulationsergebnisse kontinuierlich wiederverwendet und ebenfalls kontinuierlich neu erfasste Betriebsdaten der realen Gleitringdichtung 2 bei der Simulation berücksichtigt, so dass eine Echtzeit-Überwachung der realen Gleitringdichtung 2 durch den digitalen Zwilling 31 möglich ist. Bei der Rückübertragung der Simulationsergebnisse und/oder Daten des digitalen Zwillings können zusätzlich auch Betriebsbefehle für die Gleitringdichtung 2 übertragen werden, um beispielsweise bei Erkennen eines Problems entsprechende Gegenmaßnahmen an der realen Gleitringdichtung 2 vornehmen zu können.

Beim erfindungsgemäßen Verfahren der Gleitringdichtungsanordnung 1 werden somit aktuelle Betriebsdaten der realen Gleitringdichtung 2 erfasst und an den digitalen Zwilling 31 übertragen. Im digitalen Zwilling 31 wird eine Simulation und eine Überwachung des Betriebs der Gleitringdichtung 2 ausgeführt und Simulationsergebnisse und/oder Befehle an die reale Gleitringdichtung 2 zurückgesandt.

Es sei angemerkt, dass die Übertragung der Daten und der Simulationsergebnisse und/oder Befehle auch direkt vom Anlagenrechner 20 zum Zentralrechner 30 und umgekehrt ohne Zwischenschaltung des Cloud-Rechners 40 erfolgen kann. Weiterhin sei angemerkt, dass eine Datenreduktion beispielsweise auch im Cloud-Rechner 40 vorgenommen werden kann und/oder der digitale Zwilling 31 auch im Cloud-Rechner 40 laufen kann. Dann könnte der Hersteller 60 von seinem Zentralrechner 30 aus auf den digitalen Zwilling im Cloud-Rechner 40 zugreifen. Es sei weiterhin angemerkt, dass auch weitere IT-Architekturen denkbar sind.

Auch ist es möglich, dass der Nutzer 50 Zugriff auf den digitalen Zwilling haben kann, beispielsweise, wenn dieser im Cloud-Rechner 40 läuft.

Weiterhin ist es auch möglich, dass im Anlagenrechner 20 ein konfigurierbarer, zweiter digitaler Zwilling 22 betrieben wird. Dieser zweite digitale Zwilling 22 weist vorzugsweise einen geringeren Funktionsumfang wie der erste digitale Zwilling 31 auf, kann jedoch auch theoretisch alle Funktionen des ersten digitalen Zwillings 31 aufweisen. Bevorzugt ist jedoch ein geringerer Leistungsumfang des konfigurierbaren zweiten digitalen Zwillings 22. Der zweite digitale Zwilling 22 kann dabei auf den jeweiligen Nutzer 50 exakt abgestimmt werden und beispielsweise Daten und/oder Simulationsergebnisse liefern, welche für den Nutzer 50 den größten Informationswert haben. Auch ist es möglich, dass der konfigurierbare zweite digitale Zwilling 22 eine Vorverarbeitung der aufgenommenen Daten durchführt, so dass eine Simulation im ersten digitalen Zwilling 31 beschleunigt werden kann. Weiter bevorzugt sind sowohl der erste digitale Zwilling 31 als auch der zweite digitale Zwilling 22 jeweils als lernende Systeme eingerichtet. Darüber hinaus ist es auch möglich, dass eine Pufferung von Daten erfolgt und eine Übertragung in vorbestimmten Intervallen, beispielsweise minütlich oder stündlich oder täglich, durchgeführt wird. Diese Zwischenspeicherung hat neben dem Vorteil des Datenerhalts bei möglicherweise einem Verlust der Daten den weiteren Vorteil, dass eine Rechenkapazität innerhalb eines vorgegebenen Rahmens verbleiben kann.

Weiterhin kann der Zentralrechner 30 auch eine Trendanalyse der erfassten Betriebsdaten der realen Gleitringdichtung 2 durchführen und dabei extrapolieren, ob gegebenenfalls, beispielsweise bei einem kontinuierlichen Ansteigen von Druck und/oder Temperatur Gegenmaßnahmen zum Schutz der Gleitringdichtung 2 vorgenommen werden sollen. Weiterhin ist es auch möglich, dass zur Datenreduktion eine Clusterung der erfassten Betriebsdaten erfolgt, um eine schnelle und unkomplizierte Datenübertragung zwischen der realen Gleitringdichtung 2 und dem digitalen Zwilling 31 zu ermöglichen.

Das erfindungsgemäße Verfahren und die erfindungsgemäße Gleitringdichtungsanordnung 1 können insbesondere zur Feststellung von Wartungszeitpunkten der Gleitringdichtung 2 verwendet werden. Dadurch kann sichergestellt werden, dass kein eventuell sehr kostspieliger Ausfall der Gleitringdichtung auftritt, sondern vor einem Schaden an der Gleitringdichtung eine Wartung durchgeführt wird. Auch kann durch eine Kombination der Simulation und der Trendanalyse relativ genau bestimmt werden, wann ein Ausfall von Bauteilen der Gleitringdichtung 2 zu erwarten ist und entsprechend vorher ein Wartungstermin terminiert werden.

### Bezugszeichenliste

- 1: Gleitringdichtungsanordnung
- 2: Gleitringdichtung
- 3: rotierender Gleitring
- 4: stationärer Gleitring
- 5: Dichtspalt
- 6: Welle
- 7: Gehäuse
- 8: Produktbereich
- 9: Atmosphärenbereich
- 11: erster Sensor / Drehzahlsensor
- 12: zweiter Sensor / Temperatur-Drucksensor
- 13: dritter Sensor / Vibrationssensor
- 14: vierter Sensor / Körperschallsensor
- 15: fünfter Sensor / Leckagesensor
- 20: Anlagenrechner
- 21: erster Filter
- 22: zweiter digitaler Zwilling
- 30: Zentralrechner
- 31: digitaler Zwilling
- 32: zweiter Filter
- 33: Sender-Empfängereinrichtung
- 40: Cloud-Rechner
- 50: Nutzer / Kunde
- 60: Hersteller

## Patentansprüche

1. Verfahren zum Betreiben einer Gleitringdichtungsanordnung (1) mit einer Gleitringdichtung (2) mit einem rotierenden Gleitring (3) und einem stationären Gleitring (4), welche zwischen ihren Gleitflächen einen Dichtspalt (5) definieren, umfassend die Schritte:
- Erfassen von Betriebsdaten und/oder Umgebungsdaten der Gleitringdichtung (2),
- Übertragen der erfassten Betriebsdaten und/oder Umgebungsdaten an einen digitalen Zwilling (31) der Gleitringdichtung (2),
- Simulieren und Überwachen des Betriebs der Gleitringdichtung (2) mittels des digitalen Zwillings (31) basierend auf den übertragenen Betriebsdaten und/oder Umgebungsdaten, der Gleitringdichtung (2),
- Rückübertragen eines Simulationsergebnisses und/oder Daten des digitalen Zwillings, und
- wobei beim Schritt des Rückübertragens des Simulationsergebnisses und/oder der Daten zusätzlich auch Betriebsbefehle für die Gleitringdichtung (2) übermittelt werden.

2. Verfahren nach Anspruch 1, wobei das Simulieren und Überwachen der Gleitringdichtung (2) kontinuierlich basierend auf aktuellen erfassten Betriebsdaten und/oder Umgebungsdaten der Gleitringdichtung (2) sowie vorangehenden Simulationsergebnissen ausgeführt wird.

3. Verfahren nach einem der vorhergehenden Ansprüche, wobei die von der Gleitringdichtung (2) erfassten Betriebsdaten und/oder Umgebungsdaten von einem Anlagenrechner (20) an der Gleitringdichtung (2) ausgewertet werden und die ausgewerteten Daten an den digitalen Zwilling (31) übertragen werden.

4. Verfahren nach einem der vorhergehenden Ansprüche,
- wobei die erfassten Betriebsdaten und/oder Umgebungsdaten der Gleitringdichtung (2) vor dem Übertragen an den digitalen Zwilling mittels eines ersten Filters (21) gefiltert werden und/oder
- wobei die Simulationsergebnisse und/oder Daten des digitalen Zwillings (31) vor dem Übertragen zur Gleitringdichtung (2) von einem zweiten Filter (32) gefiltert werden und/oder
- wobei vor dem Schritt des Übertragens eine Reduzierung der Daten durchgeführt wird.

5. Verfahren nach einem der vorhergehenden Ansprüche,
- wobei bei der Verarbeitung der erfassten Betriebsdaten und/oder Umgebungsdaten im digitalen Zwilling eine Trendanalyse mittels der erfassten Betriebsdaten durchgeführt wird, und/oder
- wobei bei der Verarbeitung der Betriebsdaten und/oder Umgebungsdaten im digitalen Zwilling eine Clusterung der erfassten Betriebsdaten durchgeführt wird, und/oder
- wobei der digitale Zwilling (31) ein lernendes System ist.

6. Verfahren nach einem der vorhergehenden Ansprüche, wobei die erfassten Betriebsdaten der Gleitringdichtung (2) ausgewählt sind aus Daten zur Temperatur, Druck, Drehzahl, Leckage, Spalthöhe am Dichtspalt (5), Vibrationen an der Gleitringdichtung, Körperschall, Oberflächenschall, Spannungen und/oder Verformungen der Gleitringe, Auftreten eines Kontaktes der Gleitflächen der Gleitringe und/oder Verschleiß an der Gleitringdichtung.

7. Gleitringdichtungsanordnung umfassend:
- eine Gleitringdichtung (2) mit einem rotierenden Gleitring (3) und einem stationären Gleitring (4), welche zwischen ihren Gleitflächen einen Dichtspalt (5) definieren und mit einer Vielzahl von Sensoren (11, 12, 13, 14, 15), wobei die Sensoren eingerichtet sind, verschiedene Betriebsdaten und/oder Umgebungsdaten, der Gleitringdichtung (2) zu erfassen,
- einen Zentralrechner (30) mit einem digitalen Zwilling (31) der Gleitringdichtung (2), wobei der Zentralrechner (30) eingerichtet ist, mittels des digitalen Zwillings einen Betrieb der Gleitringdichtung (2) zu simulieren und zu überwachen und
- eine Sender-Empfängereinrichtung, welche eingerichtet ist, um die erfassten Betriebsdaten und/oder Umgebungsdaten der Gleitringdichtung (2) zum Zentralrechner (30) zu übertragen und Simulationsergebnisse und/oder Daten des digitalen Zwillings (31) und zusätzlich auch Betriebsbefehle für die Gleitringdichtung (2) zu empfangen.

8. Gleitringdichtungsanordnung nach Anspruch 7, wobei die Gleitringdichtung (2) ferner einen Anlagenrechner (20) umfasst, welcher eingerichtet ist, die erfassten Betriebsdaten und/oder Umgebungsdaten der Gleitringdichtung (2) zu verarbeiten und/oder zu reduzieren.

9. Gleitringdichtungsanordnung nach Anspruch 8, wobei der Anlagenrechner (20) eingerichtet ist, die erfassten Betriebsdaten und/oder Umgebungsdaten der Gleitringdichtung (2) mittels eines ersten Filters (21) zu filtern.

10. Gleitringdichtungsanordnung nach einem der Ansprüche 7 bis 9, wobei der Zentralrechner (30) eingerichtet ist, mit den erfassten Betriebsdaten und/oder Umgebungsdaten der Gleitringdichtung (2) eine Trendanalyse und/oder eine Clusterung der erfassten Betriebsdaten und/oder Umgebungsdaten auszuführen.

11. Gleitringdichtungsanordnung nach einem der Ansprüche 8 bis 10, wobei zwischen dem Zentralrechner (30) und dem Anlagenrechner (20) ein Cloud-Rechner (40) zwischengeschaltet ist.

12. Gleitringdichtungsanordnung nach einem der Ansprüche 8 bis 11, wobei der Anlagenrechner (20) einen konfigurierbaren, zweiten digitalen Zwilling (22) umfasst.

13. Gleitringdichtungsanordnung nach einem der Ansprüche 7 bis 11, wobei der digitale Zwilling (31) und/oder der zweite digitale Zwilling (22) als lernendes System eingerichtet ist.

## Claims

1. A method of operating a mechanical seal assembly (1) having a mechanical seal (2) with a rotating sliding ring (3) and a stationary sliding ring (4) defining a sealing gap (5) between the sliding surfaces thereof, comprising the steps of:
- collecting operating data and/or environmental data of the mechanical seal (2),
- transmitting the collected operating data and/or environmental data to a digital twin (31) of the mechanical seal (2),
- simulating and monitoring the operation of the mechanical seal (2) using the digital twin (31) based on the transmitted operating data and/or environmental data of the mechanical seal (2),
- retransmitting a simulation result and/or data of the digital twin, and
- wherein during the step of retransmitting the simulation result and/or the data, operating commands for the mechanical seal (2) are additionally co-transmitted.

2. The method according to claim 1, wherein the simulating and monitoring the mechanical seal (2) is continuously performed based on currently collected operating data and/or environmental data of the mechanical seal (2) as well as preceding simulation results.

3. The method according to one of the preceding claims, wherein the operating data and/or environmental data collected from the mechanical seal (2) are analyzed using a system computer (20) at the mechanical seal (2) and the analyzed data are transmitted to the digital twin (31).

4. The method according to one of the preceding claims,
- wherein the collected operating data and/or environmental data of the mechanical seal (2) are filtered using a first filter (21) prior to being transmitted to the digital twin and/or
- wherein the simulation results and/or data of the digital twin (31) are filtered using a second filter (32) prior to being transmitted to the mechanical seal (2) and/or
- wherein a reduction of the data is performed prior to the step of transmitting.

5. The method according to one of the preceding claims,
- wherein when processing the collected operating data and/or environmental data in the digital twin a trend analysis is performed using the collected operating data, and/or
- wherein when processing the operating data and/or environmental data in the digital twin, clustering of the collected operating data is performed, and/or
- wherein the digital twin (31) is a learning system.

6. The method according to one of the preceding claims, wherein the collected operating data of the mechanical seal (2) are selected among data on temperature, pressure, rotational speed, leakage, gap height at the seal gap (5), vibrations at the mechanical seal, structure-borne sound, surface sound, stresses and/or deformations of the sliding rings, occurrence of contact of the sliding surfaces of the sliding rings and/or wear at the mechanical seal.

7. A mechanical seal assembly comprising:
- a mechanical seal (2) having a rotating sliding ring (3) and a stationary sliding ring (4), defining a sealing gap (5) between the sliding surfaces thereof, and having a plurality of sensors (11, 12, 13, 14, 15), the sensors being configured to detect various operating data and/or environmental data of the mechanical seal (2),
- a central computer (30) comprising a digital twin (31) of the mechanical seal (2), the central computer (30) being configured to simulate and monitor an operation of the mechanical seal (2) using the digital twin, and
- a transmitter-receiver device configured to transmit the detected operation data and/or environment data of the mechanical seal (2) to the central computer (30) and to receive simulation results and/or data of the digital twin (31) and additionally operating commands for the mechanical seal (2).

8. The mechanical seal assembly according to claim 7, wherein the mechanical seal assembly (2) furthermore comprises a system computer (20) which is configured to process and/or reduce the collected operating data and/or environmental data of the mechanical seal assembly (2).

9. The mechanical seal assembly according to claim 8, wherein the system computer (20) is configured to filter the collected operating data and/or environmental data of the mechanical seal (2) using a first filter (21).

10. The mechanical seal assembly according to one of the claims 7 to 9, wherein the central computer (30) is configured to perform a trend analysis and/or a clustering of the collected operating data and/or environmental data of the mechanical seal (2) using the collected operating data and/or environmental data.

11. The mechanical seal assembly according to one of the claims 8 to 10, wherein a cloud computer (40) is interposed between the central computer (30) and the system computer (20).

12. The mechanical seal assembly according to one of the claims 8 to 11, wherein the system computer (20) comprises a configurable second digital twin (22).

13. The mechanical seal assembly according to one of the claims 7 to 11, wherein the digital twin (31) and/or the second digital twin (22) is configured as a learning system.

## Revendications

1. Procédé pour faire fonctionner un ensemble à garniture mécanique d'étanchéité (1) avec une garniture mécanique d'étanchéité (2) avec un anneau de glissement rotatif (3) et un anneau de glissement stationnaire (4), lesquels définissent une fente d'étanchéité (5) entre leurs surfaces de glissement, comprenant les étapes :
- de détection de données de fonctionnement et/ou de données d'environnement de la garniture mécanique d'étanchéité (2),
- de transmission des données de fonctionnement et/ou des données d'environnement détectées à un jumeau numérique (31) de la garniture mécanique d'étanchéité (2),
- de simulation et de surveillance du fonctionnement de la garniture mécanique d'étanchéité (2) au moyen du jumeau numérique (31) de la garniture mécanique d'étanchéité (2) sur la base des données de fonctionnement et/ou des données d'environnement transmises,
- de renvoi d'un résultat de simulation et/ou de données du jumeau numérique, et
- dans lequel lors du renvoi du résultat de simulation et/ou des données, des instructions de fonctionnement pour la garniture mécanique d'étanchéité (2) sont également transmises en supplément.

2. Procédé selon la revendication 1, dans lequel la simulation et la surveillance de la garniture mécanique d'étanchéité (2) sont exécutées en continu sur la base de données de fonctionnement et/ou de données d'environnement détectées actuelles de la garniture d'étanchéité mécanique (2) ainsi que de résultats de simulation précédents.

3. Procédé selon l'une quelconque des revendications précédentes, dans lequel les données de fonctionnement et/ou les données d'environnement détectées par la garniture mécanique d'étanchéité (2) sont évaluées par un ordinateur-système (20) sur la garniture mécanique d'étanchéité (2) et les données évaluées sont transmises au jumeau numérique (31).

4. Procédé selon l'une quelconque des revendications précédentes,
- dans lequel les données de fonctionnement et/ou les données d'environnement détectées de la garniture mécanique d'étanchéité (2) sont filtrées au moyen d'un premier filtre (21) avant la transmission au jumeau numérique et/ou
- dans lequel les résultats de simulation et/ou les données du jumeau numérique (31) sont filtré(e)s par un deuxième filtre (32) avant la transmission vers la garniture mécanique d'étanchéité (2), et/ou
- dans lequel avant l'étape de la transmission, une réduction des données est mise en oeuvre.

5. Procédé selon l'une quelconque des revendications précédentes,
- dans lequel lors du traitement des données de fonctionnement et/ou des données d'environnement détectées dans le jumeau numérique, une analyse de tendance est mise en oeuvre au moyen des données de fonctionnement détectées, et/ou
- dans lequel lors du traitement des données de fonctionnement et/ou des données d'environnement dans le jumeau numérique, un regroupement des données de fonctionnement détectées est mis en oeuvre, et/ou
- dans lequel le jumeau numérique (31) est un système d'apprentissage.

6. Procédé selon l'une quelconque des revendications précédentes, dans lequel les données de fonctionnement détectées de la garniture mécanique d'étanchéité (2) sont choisies parmi des données concernant la température, la pression, la vitesse de rotation, des fuites, la hauteur de fente sur la fente d'étanchéité (5), des vibrations sur la garniture mécanique d'étanchéité, des bruits de structure, des bruits de surface, des tensions et/ou des déformations des anneaux de glissement, l'apparition d'un contact des surfaces de glissement des anneaux de glissement et/ou l'usure sur la garniture mécanique d'étanchéité.

7. Ensemble à garniture mécanique d'étanchéité comprenant :
- une garniture mécanique d'étanchéité (2) avec un anneau de glissement rotatif (3) et un anneau de glissement stationnaire (4), lesquels définissent une fente d'étanchéité (5) entre leurs surfaces de glissement et avec une pluralité de capteurs (11, 12, 13, 14, 15), dans lequel les capteurs sont mis au point pour détecter différentes données de fonctionnement et/ou données d'environnement de la garniture mécanique d'étanchéité (2),
- un ordinateur central (30) avec un jumeau numérique (31) de la garniture mécanique d'étanchéité (2), dans lequel l'ordinateur central (30) est mis au point pour simuler et pour surveiller un fonctionnement de la garniture mécanique d'étanchéité (2) au moyen du jumeau numérique, et
- un dispositif émetteur-récepteur, lequel est mis au point pour transmettre les données de fonctionnement et/ou les données d'environnement détectées de la garniture mécanique d'étanchéité (2) à l'ordinateur central (30) et pour recevoir des résultats de simulation et/ou des données du jumeau numérique (31) et en supplément également des instructions de fonctionnement pour la garniture mécanique d'étanchéité (2).

8. Ensemble à garniture mécanique d'étanchéité selon la revendication 7, dans lequel la garniture mécanique d'étanchéité (2) comprend en outre un ordinateur-système (20), lequel est mis au point pour traiter et/ou réduire les données de fonctionnement et/ou les données d'environnement détectées de la garniture mécanique d'étanchéité (2).

9. Ensemble à garniture mécanique d'étanchéité selon la revendication 8, dans lequel l'ordinateur-système (20) est mis au point pour filtrer les données de fonctionnement et/ou les données d'environnement détectées de la garniture mécanique d'étanchéité (2) au moyen d'un premier filtre (21).

10. Ensemble à garniture mécanique d'étanchéité selon l'une quelconque des revendications 7 à 9, dans lequel l'ordinateur central (30) est mis au point pour exécuter une analyse de tendance et/ou un regroupement des données de fonctionnement et/ou des données d'environnement détectées avec les données de fonctionnement et/ou les données d'environnement détectées de la garniture mécanique d'étanchéité (2).

11. Ensemble à garniture mécanique d'étanchéité selon l'une quelconque des revendications 8 à 10, dans lequel un ordinateur en nuage (40) est intercalé entre l'ordinateur central (30) et l'ordinateur-système (20).

12. Ensemble à garniture mécanique d'étanchéité selon l'une quelconque des revendications 8 à 11, dans lequel l'ordinateur-système (20) comprend un deuxième jumeau numérique (22) pouvant être configuré.

13. Ensemble à garniture mécanique d'étanchéité selon l'une quelconque des revendications 7 à 11, dans lequel le jumeau numérique (31) et/ou le deuxième jumeau numérique (22) sont mis au point en tant que système d'apprentissage.
